# EUROPEAN PATENT APPLICATION

(11) **EP 1 371 695 A1**
(43) Date of publication of application: **17.12.2003**
(21) Application number: 02254016.5
(22) Date of filing: 10.06.2002
(51) Int. Cl.: C09D 11/00, C09D 163/00

(54) **Jetable compositions**

(71) Applicant: Vantico AG, 4057 Basel (CH)
(72) Inventor: The designation of the inventor has not yet been filed
(74) Representative: Hedley, Nicholas James Matthew

(57) **Abstract**

A cureable resin composition suitable for dispensing by jets, e.g. ink jet heads, is disclosed having a viscosity less than 30cps at a temperature within the range of 15 -180°C, e.g. 15 -100°C, the composition comprising:
at least one low viscosity reactive resin, e.g. an oxetanes, a cycloaliphatic epoxy or a furane, having a molecular weight of not greater than 300 Daltons, e.g. 250 Daltons or less, and a viscosity at a temperature in the said range of less than 30 cps;
at least one higher viscosity resin, e.g. preferably a fast-reacting epoxy resin, that acts to thicken the low viscosity resin and strengthen a jetted deposit of the composition, the higher viscosity resin having:
   a viscosity at least twice that of the low viscosity resin at the said temperature in the range stated above; and
   a functionality of greater than or equal to 2;
at least one initiator for the polymerisation of the resins, and
at least one stabiliser;

The low viscosity resin acts to solvate the higher viscosity resin prior to curing and at least partly during curing to allow adjacent jet deposits to bond together to provide a cohesive deposit without the need for solvents. Preferably, the low viscosity resin is slower to react than the higher viscosity resin to allow it to provide solvation for the higher viscosity resin.

## Description

### Technical Field

The present invention relates to curable compositions that can be deposited by jet printing or deposition techniques.

### Background Art

Jet deposition is a well-known technique for use in printing individual jobs or short print runs; heads direct droplets of liquid ink, usually under the control of a computer. As used herein, the term "jet deposition" of a composition is intended to mean the dropwise deposition of the composition onto a predetermined location on a substrate to build up a two dimensional image or a three dimensional object in accordance with data stored in a computer file.

The early jet deposition heads were based on bubblejet technology and were limited to using aqueous inks. Aqueous inks require time to dry and this factor limits their application; also, the need to provide for space where the drying takes place limits the maximum rate at which printing can take place.

More recently piezoelectric jet printer heads have become commercially available and allow the use of photo or heat curable organic inks. It is therefore possible to cure a deposit immediately after it is formed, e.g. using a UV lamp to bring about photocuring. This eliminates the need to dry the ink and so increases production speed for use in conventional two dimensional printing. Curing also allows the use of jet deposition to manufacture three dimensional articles since it possible to deposit droplets in successive layers to build up an object of a desired shape under the control of a computer program. Jet deposition has substantial advantages in being flexible, i.e. it is able to produce a wide variety of different deposits by changing the shape of the deposit in the controlling computer file and so is relatively quick and cheap to set up and to switch from one image to another. It is therefore well suited for on-demand printing of single articles or short print runs.

Jetting successive layers to build up three dimensional objects is useful in the production of prototypes during product development or for short run production since it is possible to produce three dimensional objects more rapidly using these techniques as compared to known techniques, for example injection moulding where the manufacture of the mould is highly time consuming.

Recent techniques such as micro-spraying also allow the use of curable organic liquids to form two dimensional images and three dimensional articles; micro-spraying produces directed sub-droplets formed from directed droplets that are subjected in flight to acoustic waves which break up the droplets into even finer sub-droplets, see for example US 6,182,907 (Mitsubishi Corporation) and US 6,309,047 (Xerox Corporation).

However, there are several constraints on the types of compositions that can be used in jet deposition. One requirement is that the surface tension should be less than aabout 40 dynes/cm. An important requirement is that, at deposition temperature, the composition should have a viscosity of approximately 2-30 cps. Unfortunately many curable compositions that can provide desirable final properties also have high viscosities and are therefore difficult to jet.Tthere have been several proposals to reduce the viscosity of curable compositions to allow them to be jetted.

The viscosity of the composition can be reduced to the above range by jet deposition at temperatures above room temperature, for example up to and over 100°C and, for example, temperatures of 65-75°C are straightforward to use. However, temperatures of up to 180°C are possible with certain technologies, e.g. PolymerJet ™ available from MicroFab Technologies Inc., Plano, Texas, U.S.A..

It has also been proposed to deposit phase change compositions, e.g. waxes, that are liquid at a jetting temperature (e.g. 65-75°C) but solidify at room temperature. In this way three dimensional deposits have been built up. However, wax is not a robust material and the phase change inks have very limited application. There have been proposals to incorporate a curable material into a wax (see for example US-5,855,836), but this is of only limited benefit.

Another proposal to reduce the viscosity of jetable curable compositions is to add a volatile diluent to the composition. However, the use of volatile solvents that evaporate after deposition is not desirable for health and safety reasons since the solvent gives rise to a fire hazard and can be damaging to the health of anyone inhaling substantial quantities of the solvent.

Acrylic compositions can be made having a low viscosity and are radiation curable and they have been widely investigated and are becoming increasingly common in the graphics art industry due to their rapid drying and solvent-free properties. Despite the low viscosity and fast curing rate of acrylate-based inks, the bulk properties of these inks are generally unsuitable for many applications, including the building up three dimensional objects, since acrylate polymers are brittle and shrink on curing. In addition, low viscosity acrylates can be irritants and therefore need careful handling.

There is a continuing and increasing need to provide a composition that can be rapidly cured and that avoids the brittleness and shrinkage problems of acrylate resins and so allows jet deposition to be used, for example, in high speed printing on demand in single copies or in short print runs of books, carpets, wall papers, large format images (e.g. posters and advertising hoardings) and floor tiles and other applications where scratch-resistant, tough, permanent, chemical resistant printed images are desired.

The composition can also be used for the rapid manufacture of three dimensional objects using since the rapid drying means that one layer can be cured rapidly, allowing the next layer to be deposited almost immediately afterwards (see e.g. WO01/68375, US6259962, WO00/52624 and WO00/76772). In producing three dimensional objects, it is important that the material from which the object is formed is highly cohesive since otherwise the object will fall apart and have little of no tensile strength. Thus individual droplets used to form the object should cohere to one another and, indeed optimally, it is desirable that the droplets should be joined seamlessly, i.e. the individual droplets are not discernible, in the final three dimensional object.

The present invention provides a jetable composition having improved properties by allowing a broad range of polymers and resins to be used and to provide for the cohesion between adjacent deposited.

### Disclosure of Invention

According to the present invention, there is provided a jetable composition having a viscosity less than 30cps at a temperature within the range of 15 - 180°C, more preferably at a temperature of 15 -100°C, e.g. 15 -80°C the composition comprising:
at least one low viscosity reactive resin having a molecular weight of not greater than 300 Daltons, e.g. 250 Daltons or less, and a viscosity at a temperature in the said range of less than 30 cps, e.g. 5 to 15 cps;
at least one higher viscosity resin that acts to thicken the low viscosity resin and strengthen a jetted deposit of the composition, the higher viscosity resin having:
   a viscosity greater than twice that of the low viscosity resin at the said temperature in the range stated above
   a functionality of greater than or equal to 2; and
at least one initiator for the polymerisation of the resins, and
at least one stabiliser;
wherein the low viscosity resin acts to solvate the higher viscosity resin prior to curing and at least partly during curing.

Preferably the higher viscosity resin has a molecular weight at least 1.5 times (and more preferable at least twice) that of the low viscosity resin.

It is highly that the advantageous that the low viscosity resin is slower to react than the higher viscosity resin, i.e. either the polymerisation of the former is initiated after the polymerisation of the latter or progresses at a slower rate, so that unpolymerised/uncured low viscosity resin is still present while the higher viscosity resin is curing/polymerising since this allows the growing chains of the higher viscosity resin (and any unreacted higher viscosity resin monomer or oligomer) to remain mobile for as long as possible, thereby increasing the length of the resin chain as far as possible before gelling occurs. This also prevents stress from building up as the polymer chains are progressing. For example, by the time that 50% of the higher viscosity resin has polymerised, it is preferred that less than 10% of the low viscosity resin has polymerised and when 90% of the higher viscosity resin has polymerised, less than 75% of the low viscosity resin has polymerised.

In addition, the use of the solvating low viscosity resin allows the resin in adjacent deposited droplets to mix, and thereby allowing the resin of the two droplets to polymerise with each other. This "stitches together" adjacent droplets making a more cohesive structure to the deposited object.

The low viscosity resin also maintains the viscosity of the composition of the composition at a level that allows it to be jetted. Obviously, the amounts of the various resins in the composition should be controlled so that the resin can be jetted at a temperature at which jet deposition can take place, which is generally up to 180°C.

The low viscosity resin preferably has a viscosity at a jetting temperature, e.g. 20 to 100°C, of less than 75% of the viscosity of the higher viscosity resin, more preferably not greater than 50%, e.g. not greater then 40% of the viscosity of the higher viscosity resin.

The solvating, fully curable compositions of the present invention are particularly suitable for achieving multi-variable composites, where adjacent drops and printed areas are made from different jetted compositions: for example, simply keeping the solvating low viscosity resin, essentially the same, but varying the second higher viscosity resin, which is used to provide the mechanical, textural, water/chemical resistant and other desired properties in the final cured article, gives a route to varying the micro and macro properties in the final article, under control. This is not possible using conventional techniques of bulk mixing and curing. This route leads surprisingly to greater variety of properties being produced more readily.

### The Higher Viscosity Resin

The higher viscosity resin will generally determine the nature of the properties of the deposited composition. Preferred compounds are:
a) an epoxy resin and preferably a fast-reacting epoxy resin, for example a cycloaliphatic epoxy resin, e.g. 3,4-epoxycyclohexylmethyl-3,4-epoxycyclohexane carboxylate, or bis-(3,4-epoxycyclohexyl) adipate, epoxidised polybutadienes. Other epoxies (e.g. bisphenol-A epoxy, epoxy novolacs or epoxy functionalised polytetrehydrofurans) can also be used;
b) compounds containing a reactive oxetane ring (e.g. 3,3'-[1,4-phenylene-bis(methyleneoxymethylene)]-bis(3-ethyloxetane), and higher oligomeric oxetanes),
c) acrylates (e.g. multifunctional urethane acrylates, dipentaeythritol pentaacrylate diols)

### Low viscosity resin

Preferred compounds include:
a) oxetanes (e.g. 3-ethyl-3-hydroxymethyloxetane, 3-ethyl-3-phenoxymethyloxetane, bis((1-ethyl(3-oxetanyl))methyl)ether, 3-ethyl-3-((2-ethylhexyloxy)methyl)oxetane and 3-ethyl((triethoxysilylpropoxymethyl)oxetane),
b) cycloaliphatic epoxies (e.g. 4-vinyl-1-cyclohexene diepoxide, 4-vinyl-1,2-cyclohexene 1,2-epoxide and Cyracure UVR6100) and epoxies (e.g. limonene diepoxide, 1,2-epoxyhexadecane).
c) Furanes (e.g. 2-hydroxyethyl-furan)

The low viscosity resin is incorporated within polymer chains when the composition is cured so that, after cure is completed, no substantial amount of the such resin remains. The low viscosity resin can be incorporated into the chain of the higher viscosity resin or it can polymerise with itself or with other resins.

### Initiators

Suitable cationic photo initiators should be included in the composition to initiate the polymerisation of the resins upon exposure to radiation. Such photo intitiators are well known in the art and are generally onium salts that release Lewis acids on exposure to light. Especially preferred are initiators that release tetrafluoroborate, hexafluorophosphate, hexafluoroantimonate, hexafluoroarsenate and hexachloroantimonate when exposed to radiation.

Preferred examples of commercially available products of the cationic photoinitiator are UVI-6950, UVI-6970(bis[4-(di(2-hydroxyethyl)phenyl)sulfonio]-phenylsulfide), UVI-6974 (bis[4-diphenylsulfonio)-phenyl]sulfidebishexafluoro-antimonate, UVI-6990 (hexafluorophosphate salt of UVI-6974) (manufactured by Union Carbide Corp), Adekaoptomer SP-151, SP-170 (bis[4-(di(4-(2-hydroxyethyl)phenyl)sulfonio]-phenylsul fide), SP-171 (manufactured by Asahi Denka Kogyo Co., Ltd.), Irgacure 261 (.eta..sup.5-2,4-(cyclopentadien- 1 -yl)- [(1,2,3,4,5,6- .eta.)-(1 -methylethyl)benzene]-ir on(1+)-hexafluorophosphate(1-)) (manufactured by Ciba Geigy), CI-2481, CI-2624, CI-2639, CI-2064 (manufactured by Nippon Soda Co., Ltd.), CD-1010, CD-1011, CD-1012 (4-(2-hydroxytetra-decanyloxy)-diphenyliodonium hexafluoroantimonate (manufactured by Sartomer Co., Ltd.), DTS-102, DTS-103, NAT-103, NDS-103 ((4-hydroxynaphthyl)-dimethylsulfonium hexafluoroantimonate), TPS-102 (triphenylsulfonium hexafluoroantimonate), TPS-103 (triphenylsulfonium hexafluoroantimonate), MDS-103 (4-methoxyphenyl-diphenylsulfonium hexafluoroantimonate), MPI-103 (4-methoxyphenyliodonium hexafluoroantimonate), BBI-101 (bis(4-tert-butylphenyl)iodonium tetrafluoroborate), BBI-102 (bis (4-tert-butylphenyl) iodonium hexafluoro-phosphate), BBI-103 (bis(4-tert-phenyl)iodonium hexafluoroantimonate), (manufactured by Midori Chemical Co., Ltd.), and Degacure K126 (bis[4-(diphenylsulfonio)-phenyl]sulfide bishexafluorophosphate) (manufactured by Degussa Ltd.). Among these, UVI-6970, UVI-6974, Adekaoptomer SP-170, SP-171, CD-1012, MPI-103 are particularly preferred. However, this invention is not limited to these examples.

If appropriate, the initiator system is a combination of radical and cationic initiators. Conventional radical photoinitiators may be used, e.g. acetophenone, acetophenone benzyl ketal, anthraquinone, 1-(4-isopropylphenyl)-2-hydroxy-2-methylpropan-1-one, carbazole, xanthone, 4-chlorobenzo-phenone, 4,4'-diaminobenzophenone, 1,1-dimethoxydeoxybenzoin, 3,3'-dimethyl-4-methoxybenzophenone, thioxanethone compounds, 2-methyl-1-4-(methylthio) phenyl-2-morpholino-propane-2-on, 2-benzyl-2-dimethylamino-1-(4-morpholinophenyl)-butan-1-one, triphenylamine, 2,4,6-trimethylbenzoyl diphenylphosphine oxides, bis (2,6-dimethoxybenzoyl)-2,4,4-tri-methylpentylphosphine oxide, benzyl dimethyl ketal, 1-hydroxycyclohexyl phenyl ketone, 2-hydroxy-2-methyl-1-phenylpropane-1-one, fluorenone, fluorene, benzaldehyde, benzoin ethyl ether, benzoin propyl ether, benzophenone, Michler's ketone, 3-methylacetophenone, 3,3',4,4'-tetra (t-butyl peroxycarbonyl) benzophenone (BTTB), and combined compositions of BTTB and xanthene, thioxanthene, cumarin, ketocumarin or other coloring matter photosensitizer. Among these, benzyl dimethyl ketal, 1-hydroxycyclohexyl phenyl ketone, 2,4,6-trimethylbenzoyl diphenylphosphine oxide, 2-benzyl-2-dimethylamino- 1 -(4-morpholinophenyl)-butan-1-one.

### Inhibitors/Stabilisers

Suitable inhibitors/stabilisers for the cationic photo initiators should be included in the composition to prevent the premature initiation of curing. Such inhibitors are well-known in the art. Stabilisers for curable resins should be included, e.g. hydroquinones for acrylates. More importantly" stabilisers for the whole composition should be present which prevent the long-term corrosion of the piezo print head.

### Additional Ingredients

The composition can contain additional compounds:
a) polyols (e.g. poly(tetrahydrofuran), dendrimeric polyols, polycaprolactones), which are incorporated in the polymer chains and are useful for strengthening, toughening and flexiblising the composition;
b) Smaller amounts of low molecular weight compounds may also be included to act as co-diluents with the low viscosity resins, reducing the viscosity of the composition; suitable compounds are:
   (i) **vinyl ethers** (e.g. 1,4-cyclohexane dimethanol divinylether, triethyleneglycol divinylether or hexane-1,6-diol divinyl ether),
   (ii) **acrylates** (e.g. tripropylene glycol triacrylate, hexanediol diacrylate or isobornyl acrylate) and/or
   (iii) **diols** (e.g. butan-1,4-diol).

Because the acrylate and vinyl ether diluents react faster than the higher viscosity resin, they are preferably not used as the low viscosity resin. However, they perform a useful function in providing in flight curing, as discussed below, if required.

It is preferred that the droplets are partially cured in flight so that, on impact on the target, they do not spread out excessively. Excessive spreading leads to loss of definition and poor tolerances. Naturally, in any in flight curing, the nozzle(s) of the jet should be shielded from the curing light to prevent any curing within the nozzle, which could cause blockage.

According to a second aspect of the present invention, there is provided a jetable composition comprising (in percentage by weight):

| | |
|---|---|
| 25-80% | of at least one low viscosity reactive resin having a molecular |
| | weight of not greater than 300 Daltons, e.g. 250 Daltons or less, |
| | and a viscosity at a temperature in the said range of less than 30 |
| | cps, preferably oxetane or furane, |
| 2-60% | at least one higher viscosity resin that acts to thicken the low |
| | viscosity resin and strengthen a jetted deposit the composition, |
| | the higher viscosity resin having |
| | a viscosity greater than 50 cps at the said temperature in |
| | the range stated above; and |
| | a functionality of greater than or equal to 2; and |
| 0-10% | vinyl ether resin, |
| 0-25% | diols or polyols, |
| 0-25% | acrylate resin, |
| 0.1-10% | inititators, |
| 0.1-10% | stabilisers |
| 0-25% | additives such as dyes, pigments, fillers and standard additives, |

wherein the low viscosity resin acts to solvate the higher viscosity resin prior to curing and at least partly during curing.

The preferred range of the low viscosity resin is 25-60% and the preferred range for the higher viscosity resin is 25-60%. Preferably, the molecular weight of the higher viscosity resin is at least 1.5 times (and more preferable at least twice) that of the low viscosity resin.

The preferred system is to use an oxetane as the low viscosity resin and a bifuncional cycloaliphatic epoxy resin as the higher viscosity resin.

According to a further aspect of the present invention, there is a provided a process of jet depositing a composition as set out above, which process comprises depositing successive droplets of the composition described above and irradiating the droplets to cure the composition, the droplets being deposited in accordance with a desired shape e.g. as stored in a computer file, such as a CAD file.

The system lends itself well to varying the microporoperties of the cured deposit by jetting two or more different compositions since it is possible to maintain the low viscosity resin as common to all the compositions and to vary the composition of the higher viscosity resin between compositions. Because the low viscosity resin is common, droplets of different compositions lying adjacent to each other (either side-by-side or one above the other in different deposited layers) will "stitch" together as described above.

The composition can be deposited on any substrate, e.g. paper, textiles, metal powder, paste or on prior layers of itself, which is a useful way of building a three dimensional object.

The deposits are preferably irradiated immediately on deposition. A final heat and/or radiation cure may be provided of the whole deposit.

### EXAMPLES:

There will now be described, by way of example only, various compositions of the present invention.

### Raw materials:

| **Material** | **Supplier** | **Description** |
|---|---|---|
| Component A | | |
| **Base Low Viscosity Resin** | | |
| Cyracure UVR 6000 | Union Carbide | 3-Ethyl-3-(hydroxymethyl) oxtetane |
| Component B | | |
| | | |
| **Reactive Higher Viscosity** | | |
| Uvacure 1500 | UCB | 3,4-Epoxy cyclohexyl methy-3,4-epoxy cyclohexyl carboxylate |
| SR399 | Cray Valley | Pentafunctional hydroxyacrylate |
| Actilane 251 | Akros | Trifunctional urethane acrylate |
| | | |
| **Co-diluents** | | |
| SR454 | Cray Valley | Ethoxylated trimethylolpropane triacrylate |
| SR306 | Cray Valley | Tripropylene glycol diacrylate |
| SR238 | Cray Valley | 1,6-Hexanediol diacrylate |
| CD 581 | Sartomer | Alkoxylated cyclohexane dimethanol diacrylate |
| DVE-3 | BASF | Triethylene glycol divinyl ether |
| Isobornyl acrylate | Cray Valley | |
| Genomer 1343 | Rahn | Trimethylpropane ethoxylate triacrylate |
| Genomer 1234 | Rahn | Tripropylene glycol diacrylate |
| | | |
| **Initiators** | | |
| Cyracure UVI 6976 | Union Carbide | Cationic photoinitiator |
| Irgacure 184 | Ciba Speciality Polymers | Free-radical photoinitiator |
| Speedcure ITX | Lambsons | Isopropylthioxanthone |
| Quantacure EHA | Great Lakes | Ethylhexyl p-dimethylaminobenzoate |
| Irgacure 907 | Ciba Speciality Polymers | Free-radical photoinitiator |
| | | |
| **OTHER** | | |
| Mowital B60T | Clariant | Polyvinylbutyral |

### Formulations

| | **A** | **B** | **C** | **D** | **E** | **F** | **G** | **H** | **I** | **J** |
|---|---|---|---|---|---|---|---|---|---|---|
| | | | | | | | | | | |
| **Base Resin A** | | | | | | | | | | |
| UVR6000 | | 95 | 45 | 40 | 35 | 25 | | 35 | 30 | 30 |
| | | | | | | | | | | |
| **Reactive Component B** | | | | | | | | | | |
| | | | | | | | | | | |
| Uvacure 1500 | 95 | | 50 | 50 | 40 | 40 | | 50 | 35 | 40 |
| SR399 | | | | | | 20 | | | | |
| Actilane 251 | | | | | | | 15 | | | |
| | | | | | | | | | | |
| **Co-diluents** | | | | | | | | | | |
| | | | | | | | | | | |
| DVE3 | | | | 5 | | 10 | | 10 | 14 | 5 |
| SR454 | | | | | 20 | | | | 10 | 8 |
| Genomer 1343 | | | | | | | 10 | | | |
| Isobornyl acrylate | | | | | | | 40 | | | |
| Genomer 1234 | | | | | | | 25 | | | |
| CD581 | | | | | | | | | 15 | 12 |
| | | | | | | | | | | |
| **Initiators** | | | | | | | | | | |
| | | | | | | | | | | |
| Speedcure ITX | | | | | | | 2 | | | |
| Quantacure EHA | | | | | | | 3 | | | |
| Irg907 | | | | | | | 5 | | | |
| UVI6976 | 5 | 5 | 5 | 5 | 3 | 3 | | 5 | 4 | 3 |
| Ir184 | | | | | 2 | 2 | | | 2 | 2 |

### Examples 1-4 and Comparative Examples 1-3. Jetting Characteristics

Viscosity of fluids was measured using a Brookfield HBTD Viscometer (0.8° cone spindle) at both 25 °C and 70 °C.

Fluids were jetted using a 50 µm single nozzle jet device mounted in a Jetlab (Microfab Inc, Plano, Texas) at 70°C. Peak voltage and rise, dwell and fall times were adjusted until stable jetting was obtained.
Droplet size was measured by weighing the amount of fluid dispensed in a known time, thus calculating mass of each droplet. The size of a single droplet deposited on a glass slide was measured using a calibrated graticule in a microscope.

**Table 1**

| **Jetting characteristics of fluids** | | | | | | | | | | |
|---|---|---|---|---|---|---|---|---|---|---|
| Example | Fluid | Viscosity | | Ink Jet Parameters | | | | | Droplet Mass / ng | Droplet Size (on impact) /µm |
| | | 25°C | 70°C | Rise & Fall / µs | Dwell /µs | Dwell / V V | Temp / °C | Freq / Hz | | |
| | | | | | | | | | | |
| 1 | C | 45 | 9 | 5 | 50 | 50 | 70 | 3000 | 139 | 130 |
| 2 | D | 33 | 6 | 5 | 50 | 45 | 70 | 3000 | 157 | 140 |
| 3 | E | 42 | 7 | 5 | 50 | 55 | 70 | 3000 | 142 | 140 |
| 4 | F | 62 | 8 | 5 | 50 | 55 | 70 | 3000 | 196 | 130 |
| | | | | | | | | | | |
| Comp 1 | A | 193 | 12 | 5 | 50 | 75 | 90 | 3000 | 184 | 120 |
| Comp 2 | B | 25 | 5 | 5 | 50 | 40 | 70 | 3000 | 69 | 200 |
| Comp 3 | G | 15 | 3 | 5 | 50 | 35 | 70 | 3000 | 186 | 150 |
| | | | | | | | | | | |

All fluids jet reliably to produce single droplets with no satellites, except for Comparative example 1 that due to higher viscosity required at temperature of 90°C for reliable jetting. Comparative example 2 (fluid B, low viscosity resin alone) jets reliably but droplets do no cure well on substrate. Comparative example 3 (fluid G) is based on a composition disclosed in WO99/29788 (Xaar Technology Ltd). Fluids C - F perform in a similar manner to this fluid at 70°C, but gives smaller spot sizes than comparative example 2 despite comparative drop sizes (droplet size is the diameter of the droplet in flight and spot size is the diameter of the droplet relic on the substrate).

### Examples 5 - 8 and Comparative 4 - 6. Cured fluid properties

Fluids were poured into a silicone mould and cured under UV (Fusion Systems F450 lamp, 120W / cm², 7.5s). The parts were removed from the mould, turned, and cured under UV again (Fusion SystemsF450 lamp, 120W / cm², 7.5s). Tensile properties were measured using Stable Micro Systems TA-HDi Texture Analyser, test speed 0.08 mm/s, grip distance 55mm.

**Table 2**

| **Mechanical properties of cured fluids** | | | |
|---|---|---|---|
| Example | Fluid | Tensile Strength / MPa | Tensile Modulus |
| | | | |
| 5 | C | 55.5 | 2347 |
| 6 | D | 70.7 | 2247 |
| 7 | E | 67 | 2079 |
| 8 | F | 51 | 2251 |
| | | | |
| Comp4 | A | NA | NA |
| Comp 5 | B | NA | NA |
| Comp 6 | G | 10.3 | 684 |
| | | | |

Comparative example 4 could not be measured as through cure was not achieved. Comparative example 5 exhibited very slow cure with smoking and bubbling of resin occurring. Even after a prolonged time in the mould, samples were too weak to remove without brakage, demonstrating that low viscosity resin alone does not produce good mechanical properties. Comparative example 6 produced very weak specimens. Examples 5 - 8 produced robust specimens with tensile strengths comparable to those of engineering thermoplastics. Thus fluids C - F have far superior bulk properties to conventional acrylate inks or either the low viscosity resin alone (fluid B) or the high viscosity fluid alone (fluid A).

### Examples 9-12. 3D Printing Application using Powders as receiving substrates

Mechanical test specimens were built using the following procedure.
1. A layer of the appropriate powder (500µm) was spread on a metal substrate.
2. The appropriate resin was jetted onto the powder using a Microfab single jet head heated to 70°C, in a pattern consisting of lines spaced laterally by 250µm, at a density given below. The pattern was then cured by exposure to UV light (4W, UVA, 120mJ/cm²)
3. A further layer of powder (300µm) was spread over the previous layer, and step 2 repeated.
4. Step 4 was repeated 3 times. The article was removed from the free powder, and tensile properties were measured using Stable Micro Systems TA-HDi Texture Analyser, test speed 0.08 mm/s, grip distance 55mm.

| Example | Powders | Fluids | Tensile Stress MPa | Elongatio n at Break % | Modulus MPa | Droplets per mm |
|---|---|---|---|---|---|---|
| | | | | | | |
| 9 | B60T | C | 38.8 | 7.7 | 861 | 300 |
| 10 | B60T | H | 24.4 | 3.3 | 950 | 300 |
| 11 | B60T | I | 11.9 | 34.1 | 230 | 300 |
| 12 | B60T | J | 65.1 | 5.3 | 2061 | 350 |

Thus such formulations are also suitable for 3D printing involving powder substrates, giving good material properties.

## Claims

1. A jetable composition having a viscosity less than 30cps at a temperature within the range of 15 -180°C, more preferably at a temperature of 15 - 100°C, e.g. 15 -80°C, the composition comprising:
at least one low viscosity reactive resin having a molecular weight of not greater than 300 Daltons, e.g. 250 Daltons or less, and a viscosity at a temperature in the said range of less than 30 cps;
at least one higher viscosity resin that acts to thicken the low viscosity resin and strengthen a jetted deposit of the composition, the higher viscosity resin having:
a viscosity at least twice that of the low viscosity resin at the said temperature in the range stated above; and
a functionality of greater than or equal to 2;
at least one initiator for the polymerisation of the resins, and
at least one stabiliser;
wherein the low viscosity resin acts to solvate the higher viscosity resin prior to curing and at least partly during curing.

2. A jetable composition as claimed in claim 1, wherein the low viscosity resin is slower to react than the higher viscosity resin

3. A jetable composition as claimed in claim 2, wherein the low and higher viscosity resins are such that, by the time that 50% of the higher viscosity resin has polymerised, less than 10% of the low viscosity resin has polymerised.

4. A jetable composition as claimed in claim 2 or claim 3, wherein the low and higher viscosity resins are such that, when 90% of the higher viscosity resin has polymerised, less than 75% of the low viscosity resin has polymerised.

5. A jetable composition as claimed in any one of claims 1 to 4, wherein the low viscosity resin has a viscosity at a jetting temperature, e.g. 20 to 100°C, of less than 75% of the viscosity of the higher viscosity resin,

6. A jetable composition as claimed in claim 5, wherein the low viscosity resin has a viscosity at a jetting temperature not greater than 50%, e.g. not greater then 40% of the viscosity of the higher viscosity resin.

7. A jetable composition as claimed in any one of claims 1 to 6, wherein the higher viscosity resin is one or more of the following:
a) an epoxy resin and preferably a fast-reacting epoxy resin, for example a cycloaliphatic epoxy resin, e.g. 3,4-epoxycyclohexylmethyl-3,4-epoxycyclohexane carboxylate, or bis-(3,4-epoxycuclohexyl) adipate, epoxidised polybutadienes). Other epoxies (e.g. bisphenol-A epoxy or epoxy novolacs) can also be used;
b) compounds containing a reactive oxetane ring (e.g. 3,3'-[1,4-phenylene-bis(methyleneoxymethylene)]-bis(3-ethyloxetane), and higher oligomeric oxetanes),
c) acrylates (e.g. multifunctional urethane acrylates, dipentaeythritol pentaacrylate diols,

8. A jetable composition as claimed in any one of claims 1 to 7, wherein the low viscosity resin is one or more of the following:
a) oxetanes (e.g. 3-ethyl-3-hydroxymethyloxetane, 3-ethyl-3-phenoxymethyloxetane, bis((1-ethyl(3-oxetanyl))methyl)ether, 3-ethyl-3-((2-ethylhexyloxy)methyl)oxetane and 3-ethyl((triethoxysilylpropoxymethyl)oxetane),
b) cycloaliphatic epoxies (e.g. 4-vinyl-1-cyclohexene diepoxide, 4-vinyl-1,2-cyclohexene 1,2-epoxide and Cyracure UVR6100) and epoxies (e.g. limonene diepoxide, 1,2-epoxyhexadecane).
c) Furanes (e.g. 2-hydroxyethyl-furan)

9. A jetable composition as claimed in any one of claims 1 to 8, wherein the initiator comprises a cationic photo initiator.

10. A jetable composition as claimed in claim 9, wherein the initiator system comprises a combination of a cationic photo initiator and a free radical initiator.

11. A jetable composition as claimed in any one of claims 1 to 10, which also includes one or more polyols (e.g. poly(tetrahydrofuran), dendrimeric polyols, polycaprolactones).

12. A jetable composition as claimed in any one of claims 1 to 11, which also includes up to 10% of one or more one or more of the following compounds, all having a molecular weight of less than 300 Daltons
(i) vinyl ethers (e.g. 1,4-cyclohexane dimethanol divinylether, triethyleneglycol divinylether or hexane-1,6-diol divinyl ether),
(ii) acrylates (e.g. tripropylene glycol triacrylate, hexanediol diacrylate or isobornyl acrylate) and/or
(iii) diols (e.g. butan-1,4-diol).

13. A jetable composition comprising (in percentages by weight):
| | |
|---|---|
| 25-80% | at least one low viscosity reactive resin having a molecular |
| | weight of not greater than 300 Daltons, e.g. 250 Daltons or |
| | less, and a viscosity at a temperature in the said range of |
| | less than 30 cps, preferably oxetane or furane, |
| 2-60% | at least one higher viscosity resin that acts to thicken the |
| | low viscosity resin and strengthen a jetted deposit the |
| | composition, the higher viscosity resin having |
| | a viscosity greater than twice that of the low |
| | viscosity resin at the said temperature in the range |
| | stated above; and |
| | a functionality of greater than or equal to 2; |
| 0-10% | vinyl ether resin, |
| 0-25% | diols or polyol, |
| 0-25% | acrylate resin, |
| 0.1-10% | inititator, |
| 0.1-10% | stabiliser |
| 0-25% | additives such as dyes, pigments, fillers and standard |
| | additives, |
wherein the low viscosity resin acts to solvate the higher viscosity resin prior to curing and at least partly during curing.

14. A process of jet depositing a composition of any one of claims 1 to 13, which process comprises jet depositing successive droplets of the composition of any one of claims 1 to 13 and irradiating the droplets to cure the composition, the droplets being deposited in accordance with a desired shape e.g. as stored in a computer file, such as a CAD file.

15. A process as claimed in claim 14, wherein the droplets are irradiated immediately on deposition.

16. A process as claimed in claim 14 or claim 15, wherein the droplets are partially cured in flight.

17. A process as claimed in any one of claims 13 to 16, wherein successive layers of droplets are deposited to form a three dimensional article.

18. A process as claimed in any one of claims 13 to 17, wherein two or more different compositions are used to form the shaped deposit, each composition having the same low viscosity resin but differing in the nature of the higher viscosity resin.
